# FASCICULE DE BREVET EUROPEEN

(11) **EP 3 645 320 B1**
(45) Date de publication et mention de la délivrance du brevet: **19.01.2022**
(21) Numéro de dépôt: 18762349.1
(22) Date de dépôt: 28.06.2018
(51) Int. Cl.: B60C 23/00, B60K 7/00, F04B 1/043

(54) **APPAREIL HYDRAULIQUE AMELIORE COMPRENANT UNE CONDUITE POUR LA CIRCULATION D'AIR**
VERBESSERTE HYDRAULISCHE VORRICHTUNG MIT EINER LUFTSTROMLEITUNG
IMRPOVED HYDRAULIC DEVICE COMPRISING AN AIR FLOW LINE

(30) Priorité: 30.06.2017 FR 1756164
(43) Date de publication de la demande: 06.05.2020
(73) Titulaire: Poclain Hydraulics Industrie, 60410 Verberie (FR)
(72) Inventeur: FREY, Adam, 60410 Verberie (FR); MICHON, Sylvain, 60410 Verberie (FR); VIDAL, Stéphane, 60410 Verberie (FR)
(74) Mandataire: Cabinet Beau de Loménie
(86) Numéro de dépôt international: PCT/FR2018/051597
(87) Numéro de publication internationale: WO 2019/002781

(56) Documents cités:
- WO-A1-2013/056988
- DE-A1-102015 213 692
- FR-A1- 3 037 533
- "MOTEUR HYDRAULIQUE à PASSAGE CENTRAL D'AIR COMPRIMé", RESEARCH DISCLOSURE, KENNETH MASON PUBLICATIONS, HAMPSHIRE, UK, GB, no. 362, 1 June 1994 (1994-06-01), page 289, XP000461259, ISSN: 0374-4353

## Description

### DOMAINE DE L'INVENTION

Le présent exposé concerne les machines hydrauliques, et plus précisément les machines hydrauliques entrainant les roues de véhicules. Le présent exposé concerne plus particulièrement un système de gonflage/dégonflage pour le pneumatique d'une roue entrainée par un appareil hydraulique.

### ETAT DE LA TECHNIQUE ANTERIEURE

On connait les véhicules dont les roues sont entrainées par des appareils hydrauliques montés directement sur la fusée de roue.

Dans certaines applications telles que les machines agricoles ou engins de chantier ou encore dans certaines conditions d'utilisations, il est intéressant de pouvoir réaliser un ajustement du gonflage des pneumatiques afin de faire varier la surface de contact avec le sol.

Toutefois, la réalisation de conduits de circulation d'air dans les fusées de roue s'avère problématique. En effet, les solutions antérieures proposent de prévoir des flexibles pour réaliser la circulation d'air. On comprend cependant que de telles solutions peuvent s'avérer problématiques notamment compte tenu des conditions d'utilisation des véhicules considérés, de la liaison nécessaire entre la partie fixe génératrice de pression d'air et la partie mobile qui distribue la pression d'air au pneumatique, ce qui impliquent des risques d'endommagement de tels flexibles. Le document DE 10 2015 213692 présente un moteur de roue muni d'un conduit pneumatique aménagé dans son arbre.

La demanderesse a ainsi proposé de former une chambre à air directement dans le palier de la fusée de roue, tel que proposé dans la publication FR3037533. Une telle solution s'avère cependant contraignante en termes d'assemblage, nécessite des éléments d'étanchéité ayant des diamètres élevés et nécessite d'amener un flexible hydraulique proche de la jante, ce qui présente des risques d'arrachage. Une autre solution est proposée dans le document XP000461259, "Moteur hydraulique à passage central d'air comprimé", research disclosure, Kenneth Mason Publ., Hampshire, GB.

Le présent exposé vise ainsi à proposer une solution répondant au moins partiellement à ces problématiques.

### PRESENTATION DE L'INVENTION

A cet effet, le présent exposé concerne un appareil hydraulique comprenant un stator et un rotor, le rotor étant mobile en rotation par rapport au stator selon un premier axe de rotation,
un arbre monté solidaire en rotation du rotor, l'arbre présentant un support de roue aménagé à une extrémité proximale, configuré pour recevoir une jante et un pneumatique,
caractérisé en ce que l'arbre présente un canal traversant depuis l'extrémité proximale jusqu'à une extrémité distale opposée,
et en ce que ledit appareil hydraulique comprend une chambre à air formée à l'extrémité distale de l'arbre et reliée au canal traversant, le canal traversant et la chambre à air étant réalisés de manière à permettre une circulation d'air afin de contrôler la pression d'un pneumatique.

Ladite chambre à air est isolée du volume interne de l'appareil hydraulique par au moins un élément d'étanchéité.

Ladite chambre à air est isolée du volume interne de l'appareil hydraulique par au moins deux éléments d'étanchéité définissant entre eux un volume intermédiaire

La chambre à air est au moins partiellement délimitée par un flasque monté sur l'extrémité distale de l'arbre, et comprenant une valve de décharge reliant le volume intermédiaire à un milieu ambiant, ladite valve de décharge étant configurée pour réaliser un échappement d'air vers le milieu ambiant lorsque la pression au sein du volume intermédiaire dépasse une valeur seuil.

Selon un exemple, le flasque comprend un conduit d'admission, configuré pour être relié à une source de pression.

Selon un exemple, l'appareil hydraulique comprend un distributeur de fluide, un bloc cylindres définissant une pluralité de cylindres dans lesquels sont disposés des pistons arrangés radialement par rapport au premier axe de rotation, et une came multilobes disposée en regard du bloc cylindres, le distributeur de fluide, le bloc cylindres et la came multilobes étant disposés autour de l'arbre.

Le distributeur comprend alors typiquement un noyau et un carter de distribution disposé autour du noyau, l'un parmi le carter de distribution, la came et le carter étant couplé à un pivot de direction de manière à ce que l'appareil hydraulique soit monté pivotant selon le second axe de rotation par rapport à l'essieu.

Selon un exemple, la chambre à air est isolée du volume interne de l'appareil hydraulique par deux éléments d'étanchéité interposés radialement entre le flasque et l'arbre.

Lesdits deux éléments d'étanchéité sont alors typiquement montés radialement à l'intérieur de l'arbre.

Le présent exposé concerne également un ensemble comprenant un essieu de véhicule et un appareil hydraulique tel que défini précédemment, le stator de l'appareil hydraulique étant monté tournant par rapport à l'essieu via un pivot définissant un second axe de rotation.

Le présent exposé concerne également un véhicule muni d'un tel ensemble.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente une générale d'un système selon un aspect de l'invention,
- la figure 2 est une vue détaillée d'une portion de la figure 1,
- la figure 3 est une vue en coupe de l'appareil hydraulique représenté sur la figure 1,
- la figure 4 représente une variante du mode de réalisation illustré sur les figures 1 et 2.

Sur l'ensemble des figures, les éléments en commun sont repérés par des références numériques identiques.

### DESCRIPTION DETAILLEE D'EXEMPLES DE REALISATION

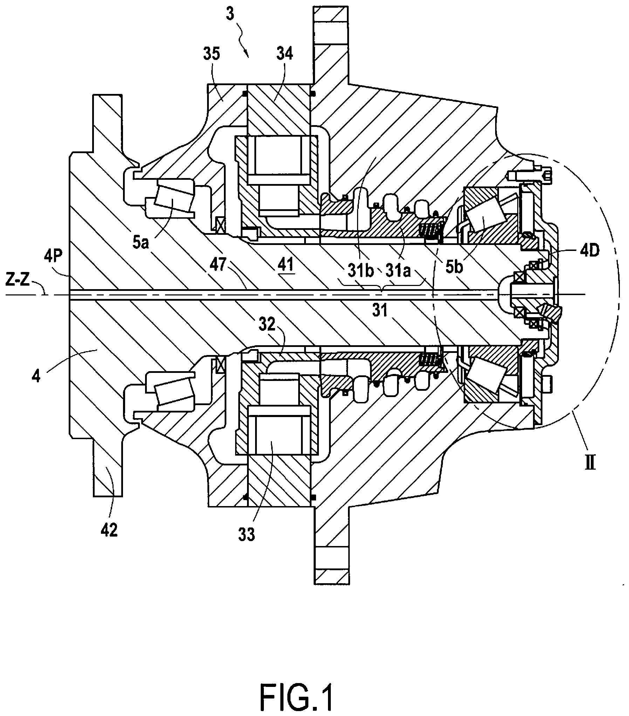

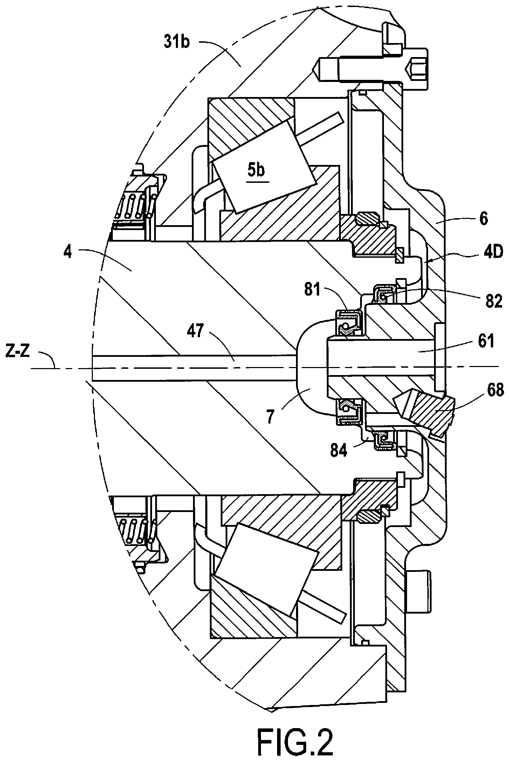

Les figures 1 et 2 présentent un système selon un aspect de l'invention.

Le système tel que proposé comprend un essieu solidaire d'un châssis de véhicule, un appareil hydraulique 3 monté sur l'essieu

L'appareil hydraulique 3 comprend un arbre 4 formant ici une fusée de roue.

L'appareil hydraulique 3 est ici un appareil hydraulique à came multilobes et pistons radiaux. L'appareil hydraulique 3 comprend une partie fixe ou stator, et une partie tournante ou rotor. Le stator est couplé à l'essieu, tandis que le rotor est couplé à l'arbre 4, de sorte que l'arbre 4 est entrainé en selon un axe de rotation Z-Z. L'arbre 4 est monté tournant selon le premier axe de rotation Z-Z par l'intermédiaire d'un palier 5 comprenant ici deux éléments de roulement 5A et 5B. Dans l'exemple représenté, les éléments de roulement 5A et 5B sont deux roulements coniques disposés selon un montage en O. A titre d'alternative, les deux roulements peuvent être disposés selon un montage en X.

L'arbre 4 comprend une partie cylindrique41 s'étendant selon l'axe de rotation Z-Z, et une portion de support de roue 42 s'étendant depuis une extrémité que l'on qualifie arbitrairement d'extrémité proximale 4P de l'arbre 4. Cette portion de support 42 est configurée pour permettre la fixation d'une jante de roue portant un pneumatique.

Comme on le voit sur les figures, l'appareil hydraulique 3 est monté autour de l'arbre 4, de sorte qu'une extrémité distale 4D de l'arbre4 (opposée à l'extrémité proximale 4P selon l'axe de rotation Z-Z) soit accessible.

A titre de variante, le stator est couplé à l'essieu par l'intermédiaire d'un pivot, qui définit un second axe de rotation, correspondant typiquement à un axe directeur pour une roue de véhicule. L'ensemble formé par l'appareil hydraulique 3 et la fusée de roue 4 peut ainsi pivoter par rapport à l'essieu 1 selon ce second axe de rotation.

On comprend qu'un tel exemple est donné à titre d'illustration, et que la structure proposée peut également s'appliquer pour un appareil hydraulique monté fixe par rapport à l'essieu. Plus généralement, la structure proposée peut s'appliquer pour une roue directrice ou pour une roue non directrice de véhicule, la structure pouvant alors être similaire mais dépourvue du pivot 2.

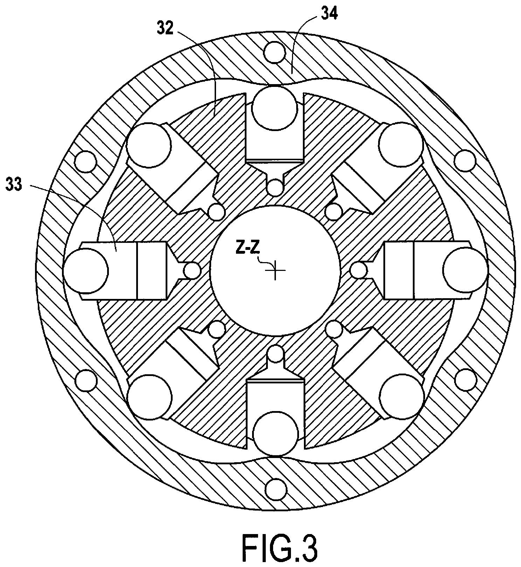

L'appareil hydraulique 3 tel que représenté comprend un distributeur 31, un bloc cylindres 32 définissant une pluralité de logements dans lesquels coulissent des pistons 33 agencés radialement par rapport à l'axe de rotation Z-Z, une came multilobes 34 disposée autour du bloc cylindres 32 et un carter 35 définissant un volume interne. Le distributeur 31 comprend un noyau 31a et un carter de distribution 31b entourant le noyau 31a. La figure 3 est ainsi une vue en coupe de l'appareil hydraulique 3, mettant en évidence la came multilobes 34, le bloc cylindres 32 et les pistons 33. Les pistons 33 comportent typiquement des galets cylindriques, qui coopèrent avec la came multilobes 34.

A titre de variante l'appareil hydraulique 3 est une machine à pistons axiaux, à palettes, à engrenages intérieurs (communément appelé gérotor) ou à engrenages extérieurs.

Dans le mode de réalisation représenté, la partie fixe par rapport à l'axe de rotation Z-Z ou stator de l'appareil hydraulique 3 est composée du distributeur 31, de la came multilobes 34 et du carter 35, tandis que la partie tournante ou rotor est constituée de l'arbre 4 et du bloc cylindres 32.

Les éléments de roulement 5A et 5B sont disposés de part et d'autre de l'appareil hydraulique 3, de manière à encadrer le bloc cylindres 32, la came multilobes 34 et le distributeur 31. L'élément de roulement 5A est ainsi disposé à proximité de l'extrémité proximale 4P de l'arbre 4, tandis que l'élément de roulement 5B est disposé à proximité de l'extrémité distale 4D de l'arbre4. Le bloc cylindres 32, la came multilobes 34 et le distributeur 31 sont ainsi disposés entre les éléments de roulement 5A et 5B. A titre d'alternative les éléments de roulement 5A et 5B sont tous deux positionnés entre le bloc cylindres 32 et l'extrémité proximale 4P de l'arbre 4.

Comme on le comprend à la lecture de ce qui précède, l'appareil hydraulique 3 assure une fonction motrice en étant capable d'entrainer une roue montée sur l'arbre 4 en rotation autour de l'axe de rotation Z-Z. L'arbre 4 est entrainé par le bloc-cylindres 32 par l'intermédiaire de cannelures.

L'arbre 4 comprend en outre un canal traversant 47, s'étendant depuis l'extrémité proximale 4P jusqu'à l'extrémité distale 4D. Un flasque 6 est positionné sur l'extrémité distale 4D de l'arbre 4, de manière à isoler l'élément de roulement 5B du milieu externe, et à former une chambre à air 7 dans le prolongement du canal traversant 47. Le flasque 6 comprend un conduit d'admission 61 configuré de manière à permettre de relier une source d'alimentation en air comprimé (non représentée sur les figures) à la chambre à air 7, et ainsi permettre de réaliser une circulation d'air via la chambre à air 7 et via le canal traversant 47.

Le conduit d'admission 61 tel que représenté traverse le flasque 6 selon l'axe de rotation Z-Z. On comprend cependant que d'autres variantes sont possibles, notamment le fait de former un conduit d'admission dans le flasque 6 qui serait relié à un conduit formé dans le carter de distribution 31b ou dans le carter de l'appareil hydraulique 3. A titre d'alternatives, le conduit d'admission 61 peut être radialement décalé et/ou incliné par rapport à l'axe de rotation Z-Z.

On comprend que la chambre à air 7 doit être isolée du volume interne de l'appareil hydraulique 3 et des éléments de roulement (ici l'élément de roulement 5B) qui sont lubrifiés à l'aide d'huile ou de graisse.

Des éléments d'étanchéité sont ainsi interposés entre le flasque 6 et l'arbre 4 de manière à isoler la chambre à air 7 du volume interne de l'appareil hydraulique 3 et des éléments de roulement 5. Dans l'exemple représenté, deux éléments d'étanchéité 81 et 82 sont montés successivement entre le flasque 6 et l'arbre 4. Ces deux éléments d'étanchéité 81 et 82 définissent un volume intermédiaire 84 entre l'arbre 4 et le flasque 6.

L'élément d'étanchéité 81 est un joint à air, et est interposé entre la chambre à air 7 et le volume intermédiaire 84. L'élément d'étanchéité 82 est un joint à huile, et est interposé entre le volume intermédiaire 84 et un volume de l'appareil hydraulique 3 comprenant l'élément de roulement 5B dans le cas où ce dernier est positionné à proximité de l'extrémité distale 4D de l'arbre 4 (comme représenté sur la figure 1), ou plus généralement un volume de l'appareil hydraulique 3 correspondant au distributeur 31, notamment dans le cas où les éléments de roulement 5A et 5B sont positionnés proches de l'extrémité proximale 4P de l'arbre 4. L'élément d'étanchéité 81 et l'élément d'étanchéité 82 sont ainsi typiquement du type bague à lèvre, de tels éléments d'étanchéité étant bien connus. Les éléments d'étanchéité 81 et 82 sont typiquement interposés radialement entre l'arbre 4 et le flasque 6. Dans l'exemple représenté sur la figure 2, les deux éléments d'étanchéité sont disposés radialement à l'intérieur de l'arbre 4, ce qui permet de minimiser la dimension de ces éléments d'étanchéité 81 et 82. Un tel mode de réalisation n'est cependant pas limitatif ; l'élément d'étanchéité 82 peut être monté radialement à l'extérieur de l'arbre 4, ou en variante les deux éléments d'étanchéité 81 et 82 peuvent être montés radialement à l'extérieur de l'arbre 4. Au moins un élément d'étanchéité parmi les éléments d'étanchéité 81 et 82 peut être fixe sur le flasque et frottant sur l'arbre ou inversement fixe sur l'arbre et frottant sur le flasque.

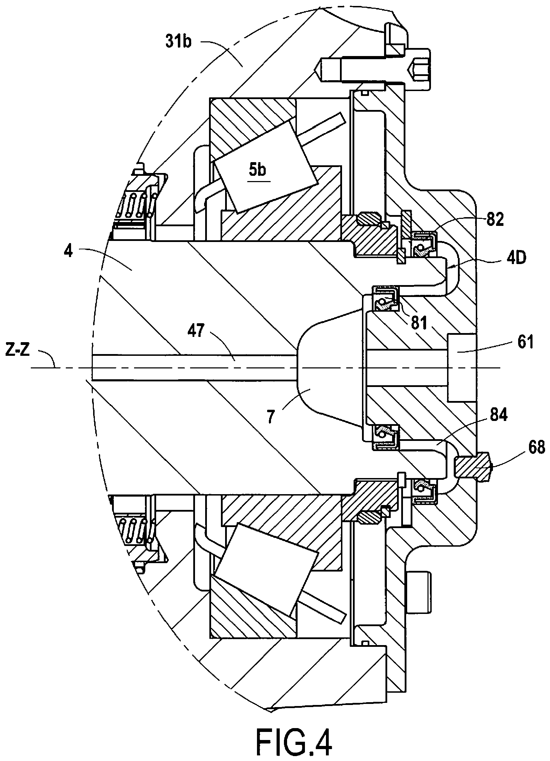

On représente ainsi à titre d'exemple sur la figure 4 une variante du mode de réalisation représenté sur les figures 1 et 2, dans laquelle l'élément d'étanchéité 82 est monté sur la périphérie externe de l'arbre 4, tandis que l'élément d'étanchéité 81 demeure monté dans la périphérie interne de l'arbre 4. Le fonctionnement demeure alors inchangé par rapport au mode de réalisation décrit précédemment.

Le flasque 6 comprend typiquement une valve de décharge 68 disposée dans un orifice de décharge reliant le volume intermédiaire 84 au milieu ambiant. La valve de décharge 68 est typiquement configurée de manière à permettre un échappement de fluide depuis le volume intermédiaire 84 vers le milieu ambiant lorsque la pression au sein du volume intermédiaire 84 dépasse une valeur seuil prédéterminée. La valve de décharge 68 est typiquement configurée pour s'ouvrir pour une différence de pression inférieure à 1 bar, on par exemple inférieure à 0,5 bar.

La valve de décharge 68 permet ainsi typiquement de décharger vers le milieu ambiant une éventuelle surpression résultant de fuites d'air depuis la chambre à air 7 vers le volume intermédiaire 84. La valve de décharge 68 peut déboucher directement dans le volume intermédiaire 84 ou y être reliée par un canal, ou encore être reliée à l'arbre 4, par exemple à un conduit de décharge aménagé dans l'arbre 4.

L'association du flasque 6, de la chambre à air 7 et du canal traversant 47permet ainsi de former une ligne d'alimentation en air comprimé au sein de l'arbre 4 en vue de réaliser un ajustement de la pression d'un pneumatique monté sur l'arbre 4. Comme on le comprend à la lecture de ce qui précède, le système proposé conserve une structure simple, et le positionnement du flasque 6 et des éléments d'étanchéité 81 et 82 permet de conserver des éléments d'étanchéité 81 et 82 ayant des diamètres standard et peu élevés, contrairement à des solutions qui consisteraient à réaliser des conduits d'amenée d'air dans la portion de support 42 de l'arbre 4 qui nécessitent alors l'utilisation d'éléments d'étanchéité de diamètre très important.

L'assemblage du système proposé est par ailleurs facilité du fait du positionnement des éléments tels que le flasque 6 et les éléments d'étanchéité 81 et 82 au niveau d'une extrémité libre de l'arbre 4. Le flasque 6 est typiquement fixé au carter de distribution 31b par l'intermédiaire d'une pluralité de vis de fixation. A titre de variante, le flasque 6 est venu de matière avec le carter de distribution 31b.

Le système proposé permet ainsi de réaliser un ajustement du gonflage des pneumatiques associées à l'arbre 4, tout en se prémunissant contre les contraintes résultant de l'utilisation de flexibles au niveau de la roue pour la transmission d'air qui entrainent des risques de rupture et pour son coût

A la lecture de ce qui précède, on comprend que la chambre à air 7 peut être formée directement dans l'arbre 4, ou délimitée par l'arbre 4 et un élément additionnel tel que le flasque 6, ou encore formée par un joint tournant pneumatique positionné au niveau de l'extrémité distale de l'arbre 4. Plus généralement, on comprend que la chambre à air 7 est formée au niveau de l'extrémité distale de l'arbre 4 de manière à être reliée au canal traversant 47 aménagé dans l'arbre 4, mais que plusieurs modes de réalisation permettent de délimiter cette chambre à air 7 afin d'obtenir l'effet technique indiqué précédemment.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Appareil hydraulique (3) comprenant un stator et un rotor, le rotor étant mobile en rotation par rapport au stator selon un premier axe de rotation (Z-Z),
un arbre (4) monté solidaire en rotation du rotor, l'arbre (4) présentant un support de roue (42) aménagé à une extrémité proximale (4P), configuré pour recevoir une jante et un pneumatique,
dans lequel
l'arbre (4) présente un canal traversant (47) depuis l'extrémité proximale (4P) jusqu'à une extrémité distale (4D) opposée,
ledit appareil hydraulique (3) comprend une chambre à air (7) formée à l'extrémité distale de l'arbre (4) et reliée au canal traversant (47), le canal traversant (47) et la chambre à air (7) étant réalisés de manière à permettre une circulation d'air afin de contrôler la pression d'un pneumatique,
ladite chambre à air est isolée du volume interne de l'appareil hydraulique (3) par au moins deux éléments d'étanchéité (81, 82) définissant entre eux un volume intermédiaire (84)
ledit appareil hydraulique (3) étant **caractérisé en ce que** la chambre à air (7) est au moins partiellement délimitée par un flasque (6) monté sur l'extrémité distale de l'arbre (4), et comprenant une valve de décharge (68) reliant le volume intermédiaire (84) à un milieu ambiant, ladite valve de décharge (86) étant configurée pour réaliser un échappement d'air vers le milieu ambiant lorsque la pression au sein du volume intermédiaire (86) dépasse une valeur seuil.

2. Appareil hydraulique (3) selon la revendication 1, dans lequel le flasque comprend un conduit d'admission (61), configuré pour être relié à une source de pression.

3. Appareil hydraulique (3) selon l'une des revendications 1 ou 2, comprenant un distributeur de fluide (31), un bloc cylindres (32) définissant une pluralité de cylindres dans lesquels sont disposés des pistons (33) arrangés radialement par rapport au premier axe de rotation (Z-Z), et une came multilobes (34) disposée en regard du bloc cylindres (32), le distributeur de fluide (31), le bloc cylindres (32) et la came multilobes (34) étant disposés autour de l'arbre (4).

4. Appareil hydraulique (3) selon la revendication 3, dans lequel le distributeur (31) comprend un noyau (31a) et un carter de distribution (31b) disposé autour du noyau (31a), l'un parmi le carter de distribution (31b), la came et le carter (35) étant couplé à un pivot de direction de manière à ce que l'appareil hydraulique (3) soit monté pivotant selon un second axe de rotation par rapport à l'essieu .

5. Appareil hydraulique (3) selon l'une des revendications 1 ou 2, éventuellement prises en combinaison avec l'une des revendications 3 ou 4, dans lequel la chambre à air (7) est isolée du volume interne de l'appareil hydraulique (3) par deux éléments d'étanchéité (81, 82) interposés radialement entre le flasque (6) et l'arbre (4).

6. Appareil hydraulique (3) selon la revendication 5, dans lequel lesdits deux éléments d'étanchéité (81, 82) sont montés radialement à l'intérieur de l'arbre (4).

7. Ensemble comprenant un essieu (1) de véhicule et un appareil hydraulique (3) selon l'une des revendications 1 à 6, le stator de l'appareil hydraulique (3) étant monté tournant par rapport à l'essieu via un pivot définissant un second axe de rotation (X-X).

## Patentansprüche

1. Hydraulische Vorrichtung (3), umfassend einen Stator und einen Rotor, wobei der Rotor gegenüber dem Stator entlang einer ersten Drehachse (Z-Z) drehbeweglich ist,
eine Welle (4), die mit dem Rotor drehfest angebracht ist, wobei die Welle (4) eine Radhalterung (42) aufweist, die an einem proximalen Ende (4P) angeordnet ist und dazu ausgelegt ist, eine Felge und einen Reifen aufzunehmen,
bei der
die Welle (4) einen Durchgangskanal (47) von dem proximalen Ende (4P) bis zu einem gegenüberliegenden distalen Ende (4D) aufweist,
die hydraulische Vorrichtung (3) eine Luftkammer (7) umfasst, die an dem distalen Ende der Welle (4) ausgebildet und mit dem Durchgangskanal (47) verbunden ist, wobei der Durchgangskanal (47) und die Luftkammer (7) derart ausgebildet sind, dass eine Luftzirkulation ermöglicht wird, um den Druck eines Reifens zu kontrollieren,
die Luftkammer vom Innenvolumen der hydraulischen Vorrichtung (3) durch wenigstens zwei Dichtungselemente (81, 82) isoliert ist, die zwischen sich ein Zwischenvolumen (84) definieren,
wobei die hydraulische Vorrichtung (3) **dadurch gekennzeichnet ist, dass** die Luftkammer (7) wenigstens teilweise durch einen Flansch (6) begrenzt ist, der am distalen Ende der Welle (4) angebracht ist, und ein Entlastungsventil (68) umfasst, das das Zwischenvolumen (84) mit einem Umgebungsmedium verbindet, wobei das Entlastungsventil (86) so ausgelegt ist, dass ein Entweichen von Luft in Richtung des Umgebungsmediums erfolgt, wenn der Druck innerhalb des Zwischenvolumens (86) einen Schwellwert überschreitet.

2. Hydraulische Vorrichtung (3) nach Anspruch 1, bei der der Flansch eine Einlassleitung (61) umfasst, die dazu ausgelegt ist, mit einer Druckquelle verbunden zu werden.

3. Hydraulische Vorrichtung (3) nach einem der Ansprüche 1 oder 2, umfassend einen Fluidverteiler (31), einen Zylinderblock (32), der eine Vielzahl von Zylindern definiert, in denen Kolben (33) radial zu der ersten Drehachse (Z-Z) angeordnet sind, sowie einen mehrlappigen Nocken (34), der gegenüber dem Zylinderblock (32) angeordnet ist, wobei der Fluidverteiler (31), der Zylinderblock (32) und der mehrlappige Nocken (34) um die Welle (4) herum angeordnet sind.

4. Hydraulische Vorrichtung (3) nach Anspruch 3, bei der der Verteiler (31) einen Kern (31a) und ein um den Kern (31a) herum angeordnetes Steuergehäuse (31b) umfasst, wobei eines von dem Steuergehäuse (31b), dem Nocken und dem Gehäuse (35) mit einem Lenkzapfen gekoppelt ist, so dass die hydraulische Vorrichtung (3) gegenüber der Radachse um eine zweite Drehachse schwenkbar angebracht ist.

5. Hydraulische Vorrichtung (3) nach einem der Ansprüche 1 oder 2, eventuell in Kombination mit einem der Ansprüche 3 oder 4, bei der die Luftkammer (7) von dem Innenvolumen der hydraulischen Vorrichtung (3) durch zwei Dichtungselemente (81, 82) isoliert ist, die radial zwischen dem Flansch (6) und der Welle (4) angeordnet sind.

6. Hydraulische Vorrichtung (3) nach Anspruch 5, bei der die beiden Dichtungselemente (81, 82) radial innerhalb der Welle (4) angebracht sind.

7. Anordnung umfassend eine Radachse (1) eines Fahrzeugs und eine hydraulische Vorrichtung (3) nach einem der Ansprüche 1 bis 6, wobei der Stator der hydraulischen Vorrichtung (3) gegenüber der Radachse über ein Drehgelenk, das eine zweite Drehachse (XX) definiert, drehbar gelagert ist.

## Claims

1. A hydraulic apparatus (3) comprising a stator and a rotor, the rotor being movable in rotation relative to the stator along a first axis of rotation (Z-Z),
a shaft (4) mounted secured in rotation to the rotor, the shaft (4) having a wheel carrier (42) arranged at a proximal end (4P), configured to receive a rim and a tire,
wherein the shaft (4) has a through channel (47) from the proximal end (4P) to an opposite distal end (4D),
said hydraulic apparatus (3) comprises an air chamber (7) formed at the distal end of the shaft (4) and connected to the through channel (47), the through channel (47) and the air chamber (7) being made so to allow an air circulation in order to control the pressure of a tire,
said air chamber is isolated from the internal volume of the hydraulic apparatus (3) by at least two sealing elements (81, 82) defining therebetween an intermediate volume (84),
Said hydraulic apparatus (3) being **characterized in that** the air chamber (7) is at least partially delimited by a flange (6) mounted on the distal end of the shaft (4), and comprising a release valve (68) connecting the intermediate volume (84) to a surrounding environment, said release valve (86) being configured to allow air to escape toward the surrounding environment when the pressure within the intermediate volume (86) exceeds a threshold value.

2. The hydraulic apparatus (3) according to claim 1, wherein the flange comprises an intake conduit (61) configured to be connected to a pressure source.

3. The hydraulic apparatus (3) according to any of claims 1 or 2, comprising a fluid distributor (31), a cylinder block (32) defining a plurality of cylinders in which pistons (33) arranged radially relative to the first axis of rotation (ZZ) are disposed, and a multilobe cam (34) disposed opposite the cylinder block (32), the fluid distributor (31), the cylinder block (32) and the multilobe cam (34) being disposed around the shaft (4).

4. The hydraulic apparatus (3) according to claim 3, wherein the distributor (31) comprises a core (31a) and a distribution casing (31b) disposed around the core (31a), one among the distribution casing (31b), the cam and the casing (35) being coupled to a steering pivot so that the hydraulic apparatus (3) is pivotally mounted along a second axis of rotation relative to the axle.

5. The hydraulic apparatus (3) according to any of claims 1 or 2, optionally taken in combination with any of claims 3 or 4, wherein the air chamber (7) is isolated from the internal volume of the hydraulic apparatus (3) by two sealing elements (81, 82) interposed radially between the flange (6) and the shaft (4).

6. The hydraulic apparatus (3) according to claim 5, wherein said two sealing elements (81, 82) are mounted radially inside the shaft (4).

7. An assembly comprising a vehicle axle (1) and a hydraulic apparatus (3) according to any of claims 1 to 6, the stator of the hydraulic apparatus (3) being rotatably mounted relative to the axle via a pivot defining a second axis of rotation (X-X).
